# DEMANDE DE BREVET EUROPEEN

(11) **EP 4 707 884 A1**
(43) Date de publication de la demande: **11.03.2026**
(21) Numéro de dépôt: 25200021.1
(22) Date de dépôt: 03.09.2025
(51) Int. Cl.: G02B 6/12, G01J 1/02, G01J 5/0818, G02B 6/122, G02B 6/125, G06N 10/40, H04B 10/00, G01J 5/06

(54) **CIRCUIT INTEGRE PHOTONIQUE**

(30) Priorité: 06.09.2024 FR 2409501
(71) Demandeur: Commissariat à l'Energie Atomique et aux Energies Alternatives, 75015 Paris (FR)
(72) Inventeur: CHAUSSE, Pierre, 38054 GRENOBLE CEDEX 09 (FR); GUERBER, Sylvain, 38054 GRENOBLE CEDEX 09 (FR); CONGIA, Sara, 38054 GRENOBLE CEDEX 09 (FR)
(74) Mandataire: Cabinet Beaumont

(57) **Abrégé**

La présente description concerne un circuit intégré photonique (300) comprenant :
- un substrat semiconducteur (101) ;
- un empilement actif situé du côté d'une première face (101T) du substrat semiconducteur (101) et comportant :
une première couche (103) en un premier matériau présentant un premier indice de réfraction revêtant la première face (101T) du substrat semiconducteur (101) ;
une deuxième couche (105) en un deuxième matériau présentant un deuxième indice de réfraction revêtant la première couche (103) ; et
une troisième couche (107) en le premier matériau revêtant la deuxième couche (105) ;

- au moins un composant photonique (111) formé dans l'empilement actif ; et
- une couche optiquement absorbante (301) située à l'aplomb dudit au moins un composant photonique (111) et en contact avec une face de la première couche (103) opposée à la deuxième couche (105) .

## Description

### Domaine technique

La présente description concerne, de façon générale, les circuits intégrés photoniques et, plus particulièrement, les circuits intégrés photoniques quantiques, dans lesquels il est souhaitable d'atteindre des niveaux de bruit optique les plus faibles possibles.

### Technique antérieure

Le développement des technologies quantiques devrait permettre une augmentation de performances et l'introduction de nouvelles fonctionnalités par rapport aux dispositifs, algorithmes et protocoles de communication existants. Les technologies quantiques permettent notamment de sécuriser des communications en tirant profit du théorème d'impossibilité du clonage quantique. Les technologies quantiques permettent par ailleurs un accroissement des capacités de calcul grâce à l'utilisation de bits quantiques, ou qubits, à la place des bits classiques. Afin de rendre ces technologies accessibles à grande échelle et à moindre coût, il serait souhaitable de disposer de circuits intégrés photoniques dans lesquels des qubits peuvent être produits, traités et détectés.

Les circuits intégrés photoniques quantiques ouvrent une voie prometteuse vers l'implémentation des technologies susmentionnées. Par exemple, des circuits à base de silicium ou de nitrure de silicium permettent, en tirant profit d'effets non-linéaires du matériau, de produire des états quantiques d'un rayonnement, tels que des paires de photons uniques. En pratique, un rayonnement laser continu provenant d'une source laser appelée « pompe » est dirigé vers un guide d'ondes, à l'intérieur duquel le rayonnement est fortement confiné de sorte que l'interaction rayonnement-matière soit suffisamment intense pour causer des phénomènes non-linéaires. Le rayonnement est plus précisément absorbé et, conformément aux lois de conservation de l'énergie et de la quantité de mouvement, un rayonnement quantique est produit à différentes longueurs d'onde. Des paires de photons intriqués, servant de brique de base pour les diverses applications de photonique quantique utilisant des qubits, peuvent notamment ainsi être produites. Les photons sont ensuite filtrés et démultiplexés afin d'être dirigés, selon leur longueur d'onde, vers des guides d'onde distincts. L'utilisation de circuits intégrés photoniques quantiques permet de créer et de traiter des états quantiques à partir de ces photons, qui sont ensuite analysés par des détecteurs de photons uniques intégrés ou déportés, en fonction de l'application.

Le fait de travailler sur des photons uniques implique que tout rayonnement parasite présent à l'intérieur du circuit intégré photonique est susceptible de nuire à ses performances. La présence de rayonnements parasites limite notamment un rapport d'extinction (« Extinction Ratio » - ER, en anglais), c'est-à-dire un rapport d'intensités entre des rayonnements transmis et bloqués par un filtre photonique, de filtres de rejet utilisés pour supprimer un rayonnement laser injecté, par une source, dans un circuit intégré photonique. Par ailleurs, le rayonnement parasite provoque des phénomènes de diaphotie, ou « crosstalk optique », dans des démultiplexeurs utilisés pour trier les photons en fonction de leur longueur d'onde. Cela augmente le transfert de signaux indésirables dans des canaux du démultiplexeur. Le bruit optique présent dans un circuit intégré photonique peut en outre saturer des détecteurs de photons uniques présents dans le circuit.

La suppression des rayonnements parasites dans les circuits intégrés photoniques constitue ainsi une étape clé vers le développement de technologies quantiques entièrement intégrées et présentant des performances élevées.

Plusieurs publications ont mis en évidence la présence de rayonnements parasites dans des circuits photoniques. En particulier, des rayonnements parasites ont été détectés dans des circuits photoniques sous la forme d'un bruit de fond optique présent dans des filtres à fort rapport d'extinction utilisés pour supprimer un rayonnement laser d'excitation provenant d'une source et pour laisser passer un rayonnement quantique produit par le circuit.

Un circuit photonique permettant de produire et de filtrer des paires de photons uniques comprend typiquement un résonateur optique annulaire, comprenant une cavité optique formée par un guide d'ondes en forme d'anneau permettant de renforcer les phénomènes non-linéaires qui sont à l'origine de la production de paires de photons intriqués, et un filtre à fort rapport d'extinction comprenant généralement plusieurs étages de filtrage en cascade. En théorie, une augmentation du nombre d'étages de filtrage devrait permettre d'accroître le rapport d'extinction du filtre. Toutefois, en pratique, le rapport d'extinction est plafonné en raison de phénomènes de diffusion du rayonnement laser d'excitation à l'intérieur du circuit photonique, produisant un bruit de fond optique qui limite les performances de filtrage.

Pour tenter de pallier ce problème, il a été envisagé d'utiliser deux puces photoniques distinctes : une première puce destinée à recevoir le rayonnement laser en provenance de la source d'excitation et à produire des paires de photons intriqués, et une deuxième puce destinée à traiter (filtrage et démultiplexage) les paires de photons issues de la première puce. Toutefois, cette architecture ne donne pas satisfaction car elle présente l'inconvénient d'introduire des pertes de couplage à l'interface entre les première et deuxième puces photoniques. En particulier, l'un des photons de chaque paire peut être perdu en raison de l'interface entre les puces, conduisant ainsi à une dégradation d'un taux de comptage de coïncidences par la deuxième puce.

### Résumé de l'invention

Il existe un besoin de pallier tout ou partie des inconvénients des circuits intégrés photoniques existants. En particulier, il serait souhaitable de réduire la présence de rayonnements parasites dans les circuits intégrés photoniques.

Pour cela, un mode de réalisation prévoit un circuit intégré photonique comprenant :
- un substrat semiconducteur ;
- un empilement actif situé du côté d'une première face du substrat semiconducteur et comportant :
   une première couche en un premier matériau présentant un premier indice de réfraction revêtant la première face du substrat semiconducteur ;
   une deuxième couche en un deuxième matériau présentant un deuxième indice de réfraction revêtant la première couche ; et
   une troisième couche en le premier matériau revêtant la deuxième couche ;
- au moins un composant photonique formé dans l'empilement actif ; et
- au moins un mur d'isolation périphérique optiquement absorbant entourant au moins partiellement ledit au moins un composant photonique et s'étendant, depuis une face de la troisième couche opposée au substrat semiconducteur, jusque dans la première couche.

Selon un mode de réalisation, ledit au moins un mur d'isolation périphérique traverse la première couche.

Selon un mode de réalisation, ledit au moins un mur d'isolation périphérique pénètre dans le substrat semiconducteur.

Selon un mode de réalisation, ledit au moins un mur d'isolation périphérique :
- présente, en vue de dessus, une forme en C ; ou
- comprend deux parties présentant chacune, en vue de dessus, une forme en L.

Selon un mode de réalisation, ledit au moins un mur d'isolation périphérique comprend une tranchée comportant des flancs et un fond revêtus d'une couche en matériau optiquement absorbant.

Selon un mode de réalisation, ledit au moins un mur d'isolation périphérique est en un troisième matériau choisi parmi :
- le carbone ;
- le germanium ;
- un polymère absorbant
- le silicium amorphe ;
- le silicium polycristallin dopé ;
- le silicium cristallin fortement dopé ;
- un matériau comprenant des nanoparticules absorbantes ; et
- un métal ou un alliage métallique.

En outre, un mode de réalisation prévoit un circuit intégré photonique comprenant :
- un substrat semiconducteur ;
- un empilement actif situé du côté d'une première face du substrat semiconducteur et comportant :
   une première couche en un premier matériau présentant un premier indice de réfraction revêtant la première face du substrat semiconducteur ;
   une deuxième couche en un deuxième matériau présentant un deuxième indice de réfraction revêtant la première couche ; et
   une troisième couche en le premier matériau revêtant la deuxième couche ;
- au moins un composant photonique formé dans l'empilement actif ; et
- une couche optiquement absorbante située à l'aplomb dudit au moins un composant photonique et en contact avec une face de la première couche opposée à la deuxième couche.

Selon un mode de réalisation, la couche optiquement absorbante est en un troisième matériau choisi parmi :
- le carbone ;
- le germanium ;
- un polymère absorbant
- le silicium amorphe ;
- le silicium polycristallin dopé ;
- le silicium cristallin fortement dopé ;
- un matériau comprenant des nanoparticules absorbantes ; et
- un métal ou un alliage métallique.

Selon un mode de réalisation, le circuit comprend en outre au moins un mur d'isolation périphérique optiquement absorbant entourant au moins partiellement ledit au moins un composant photonique et s'étendant, depuis une face de la troisième couche opposée au substrat semiconducteur, jusque dans la première couche.

Selon un mode de réalisation, ledit au moins un mur d'isolation périphérique traverse la première couche.

Selon un mode de réalisation, ledit au moins un mur d'isolation périphérique pénètre dans le substrat semiconducteur.

En outre, un mode de réalisation prévoit un circuit intégré photonique comprenant :
- un substrat semiconducteur ;
- un empilement actif situé du côté d'une première face du substrat semiconducteur et comportant :
   une première couche en un premier matériau présentant un premier indice de réfraction revêtant la première face du substrat semiconducteur ;
   une deuxième couche en un deuxième matériau présentant un deuxième indice de réfraction revêtant la première couche ; et
   une troisième couche en le premier matériau revêtant la deuxième couche ;
- au moins un composant photonique formé dans l'empilement actif ; et
- au moins une structure d'isolation périphérique comportant une surface optiquement réfléchissante entourant au moins partiellement ledit au moins un composant photonique et s'étendant, depuis une face de la troisième couche opposée au substrat semiconducteur, dans l'empilement actif.

Selon un mode de réalisation, ladite au moins une structure d'isolation périphérique est remplie d'air et présente, en vue de dessus, un flanc incliné, par rapport à une direction de propagation d'un rayonnement dans ledit au moins un composant photonique, d'un angle permettant une réflexion totale du rayonnement.

Selon un mode de réalisation, ladite au moins une structure d'isolation périphérique comprend des flancs revêtus d'un matériau réfléchissant.

Selon un mode de réalisation, le substrat semiconducteur est absent sous ledit au moins un composant photonique.

Selon un mode de réalisation, le substrat semiconducteur est absent sous ladite au moins une structure d'isolation périphérique.

Selon un mode de réalisation, le deuxième indice de réfraction est strictement supérieur au premier indice de réfraction.

Selon un mode de réalisation, le premier matériau est l'oxyde de silicium et le deuxième matériau est le silicium.

Selon un mode de réalisation, ledit au moins un composant photonique est choisi parmi :
- une surface d'entrée ou une surface de sortie d'un guide d'ondes ;
- un filtre ;
- un résonateur ;
- un démultiplexeur ; et
- un détecteur de photons.

Selon un mode de réalisation, le circuit comprend en outre une couche optiquement absorbante située à l'aplomb dudit au moins un composant photonique et en contact avec une face de la première couche opposée à la deuxième couche.

Selon un mode de réalisation, la couche optiquement absorbante est située sur et en contact avec la première face du substrat semiconducteur.

Selon un mode de réalisation, le circuit comprend en outre une cavité s'étendant, depuis une deuxième face du substrat semiconducteur opposée à la première face, jusqu'à la première face du substrat semiconducteur et située à l'aplomb dudit au moins un composant photonique, la couche optiquement absorbante revêtant un fond de la cavité.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1A est une vue de dessus, schématique et partielle, d'un circuit intégré photonique selon un mode de réalisation ;
la figure 1B est une vue de côté et en coupe selon le plan BB de la figure 1A du circuit intégré photonique de la figure 1A ;
la figure 1C est une vue de côté et en coupe selon le plan BB de la figure 1A d'une variante du circuit intégré photonique des figures 1A et 1B ;
la figure 2 est une vue de dessus, schématique et partielle, d'un circuit intégré photonique selon un mode de réalisation ;
la figure 3 est une vue de côté et en coupe, schématique et partielle, d'un circuit intégré photonique selon un mode de réalisation ;
la figure 4 est une vue de côté et en coupe, schématique et partielle, d'un circuit intégré photonique selon un mode de réalisation ;
la figure 5 est une vue de côté et en coupe, schématique et partielle, d'un circuit intégré photonique selon un mode de réalisation ;
la figure 6 est une vue de côté et en coupe, schématique et partielle, d'un circuit intégré photonique selon un mode de réalisation ;
la figure 7A est une vue de dessus, schématique et partielle, d'un circuit intégré photonique selon un mode de réalisation ;
la figure 7B est une vue de côté et en coupe selon le plan BB de la figure 7A du circuit intégré photonique de la figure 7A ;
la figure 8 est une vue de dessus, schématique et partielle, d'un circuit intégré photonique selon un mode de réalisation ;
la figure 9 est une vue de dessus, schématique et partielle, d'un circuit intégré photonique selon un mode de réalisation ;
la figure 10 est une vue en perspective, schématique et partielle, d'un circuit intégré photonique selon un mode de réalisation ;
la figure 11 est une vue en perspective, schématique et partielle, d'un circuit intégré photonique selon un mode de réalisation ; et
la figure 12 est une vue en perspective, schématique et partielle, d'un circuit intégré photonique selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les diverses applications des circuits intégrés photoniques n'ont pas été détaillées, les modes de réalisation décrits étant compatibles avec toutes ou la plupart des applications mettant en œuvre des circuits intégrés photoniques, moyennant éventuellement des adaptations à la portée de la personne du métier à la lecture de la présente description. Par ailleurs, les différents composants photoniques des circuits intégrés photoniques n'ont pas été détaillés, les modes de réalisation de la présente description étant compatibles avec tous ou la plupart des composants photoniques connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

Sauf précision contraire, l'expression « en contact avec » signifie « en contact mécanique avec ».

Dans la description qui suit, les qualificatifs « isolant » et « conducteur » signifient respectivement, sauf précision contraire, électriquement isolant et électriquement conducteur.

L'expression « réflectance d'une couche » désigne un rapport entre un flux d'un rayonnement réfléchi par la couche et un flux d'un rayonnement incident. Par ailleurs, l'expression « transmittance d'une couche » désigne un rapport entre un flux d'un rayonnement transmis par la couche et un flux d'un rayonnement incident. Dans la suite de la description, une couche est dite absorbante à un rayonnement lorsque la somme de sa réflectance et de sa transmittance est, pour ce rayonnement, strictement inférieure à 50 %, de préférence inférieure ou égale à 25 %, plus préférentiellement inférieure ou égale à 10 %. La définition qui précède n'est pas limitée au cas d'une couche, mais s'applique plus généralement à tout élément susceptible d'être exposé à un rayonnement, par exemple un mur, un substrat, une région, un empilement de plusieurs couches, etc.

Dans un circuit intégré photonique, les rayonnements parasites prennent la forme d'un bruit de fond causé par des photons s'échappant de composants photoniques tels que des filtres à fort rapport d'extinction, des guides d'ondes associés à ces composants, etc. Les rayonnements parasites sont alors diffusés dans l'ensemble du circuit, une partie de ces rayonnements étant par exemple collectée par un guide d'ondes de sortie.

Les rayonnements parasites proviennent en pratique de deux types de pertes : des pertes par couplage et des pertes par propagation.

Les pertes par couplage correspondent à une différence entre un rayonnement d'entrée, injecté dans un composant photonique, et un rayonnement de sortie, transmis par le composant photonique. Dans le cas d'un guide d'ondes, une partie du rayonnement d'entrée qui n'est pas couplée dans le guide d'ondes s'échappe hors du guide d'ondes et est alors diffusée dans le circuit intégré, le circuit comprenant en général un empilement de couches transparentes au rayonnement d'intérêt. À chaque interface, un rayonnement parasite est alors partiellement réfléchi et transmis, conduisant à une modification de sa direction de propagation. Des rayonnements parasites sont ainsi diffusés dans l'ensemble du circuit selon des chemins de propagation imprévisibles.

Les pertes par propagation sont quant à elles causées par un rayonnement initialement confiné à l'intérieur du guide d'ondes mais qui parvient à s'en échapper. Le rayonnement confiné à l'intérieur d'un guide d'ondes se propage selon des modes spécifiques, donnés par les équations de Maxwell. La forme des modes supportés par le guide d'ondes, c'est-à-dire l'amplitude du champ électromagnétique dans la section du guide d'ondes, dépend de la géométrie choisie. Pour un guide d'ondes monomode en silicium de section rectangulaire, le mode est essentiellement confiné dans le guide d'ondes mais comprend une partie du champ se propageant en surface du guide d'ondes. La rugosité de surface du guide d'ondes, les défauts de fabrication à l'interface entre l'âme et la gaine, et le rayon de courbure du guide d'ondes tendent à produire des pertes par propagation.

Les rayonnements parasites, causés par les deux phénomènes de pertes décrits ci-dessus, se propagent dans tout le circuit intégré photonique.

Un objet des modes de réalisation décrits consiste à réduire autant que possible la transmission de rayonnements parasites dans un circuit intégré photonique. Pour cela, un ou des composants photoniques sensibles du circuit sont isolés par rapport à une ou des sources potentielles de rayonnements parasites en absorbant des photons indésirables produits par la ou les sources et/ou en contrôlant des chemins de réflexion empruntés par ces photons.

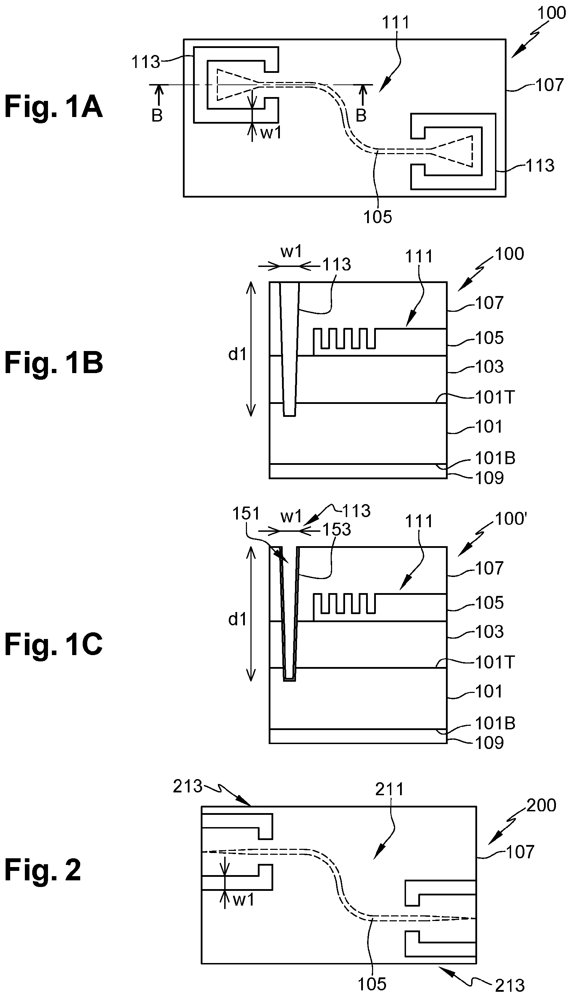

La figure 1A est une vue de dessus, schématique et partielle, d'un circuit intégré photonique 100 selon un mode de réalisation. La figure 1B est une vue de côté et en coupe selon le plan BB de la figure 1A du circuit intégré photonique 100 de la figure 1A.

Dans l'exemple illustré, le circuit intégré photonique 100 comprend un substrat semiconducteur 101. Le substrat semiconducteur 101 est par exemple une plaquette ou un morceau de plaquette en un matériau semiconducteur, par exemple le silicium.

Dans l'exemple illustré, le circuit intégré photonique 100 comprend en outre une couche 103 revêtant une face supérieure 101T du substrat semiconducteur 101. Dans l'exemple représenté, la couche 103 est plus précisément située sur et en contact, par sa face inférieure, avec la face supérieure 101T du substrat semiconducteur 101. La couche 103 est en un matériau présentant un indice de réfraction n1. La couche 103 est par exemple une couche isolante, par exemple en oxyde de silicium. À titre d'exemple, la couche 103 présente une épaisseur de l'ordre de quelques micromètres, par exemple comprise entre 2 et 3 µm.

Dans l'exemple illustré, le circuit intégré photonique 100 comprend en outre une couche 105 revêtant une partie de la face supérieure de la couche 103. Dans l'exemple représenté, la couche 105 est plus précisément située sur et en contact, par sa face inférieure, avec une partie de la face supérieure de la couche 103. La couche 105 est en un matériau présentant un indice de réfraction n2 strictement supérieur à l'indice de réfraction n1. La couche 105 est par exemple une couche semiconductrice, par exemple en silicium, ou une couche isolante, par exemple en un nitrure tel que le nitrure de silicium ou le nitrure de gallium.

À titre d'exemple, le substrat semiconducteur 101 et les couches 103 et 105 proviennent d'un substrat de type SOI (« Silicon On Insulator » - silicium sur isolant, en anglais), la couche 103 correspondant dans ce cas à une couche d'oxyde enterrée (« Buried OXide » - BOX, en anglais) du substrat SOI. Dans ce cas, les couches 103 et 105 sont en oxyde de silicium et en silicium, respectivement.

Dans l'exemple illustré, le circuit intégré photonique 100 comprend en outre une couche 107 revêtant la face supérieure et les flancs de la couche 105. La couche 107 revêt en outre des parties de la face supérieure de la couche 103 non revêtues par la couche 105. Dans l'exemple représenté, la couche 107 est plus précisément située sur et en contact, par sa face inférieure, avec la face supérieure et les flancs de la couche 105 et avec les parties de la face supérieure de la couche 103 non revêtues par la couche 105. La couche 107 est par exemple en le même matériau que la couche 103, c'est-à-dire le matériau d'indice de réfraction n1. La couche 107 est par exemple une couche isolante, par exemple en oxyde de silicium.

À titre d'exemple, les couches 103, 105 et 107 font partie d'un empilement actif situé du côté de la face supérieure 101T du substrat semiconducteur 101.

Dans l'exemple illustré, le circuit intégré photonique 100 comprend en outre une couche 109 revêtant une face inférieure 101B du substrat semiconducteur 101. Dans l'exemple représenté, la couche 109 est plus précisément située sous et en contact, par sa face supérieure, avec la face inférieure 101B du substrat semiconducteur 101. La couche 109 est par exemple une couche isolante, par exemple en oxyde de silicium.

Dans l'exemple illustré, la couche 105 fait partie d'un guide d'ondes 111. Dans cet exemple, la couche 105 forme une âme du guide d'ondes 111. À titre d'exemple, le guide d'ondes 111 est formé par photolithographie puis gravure de la couche 105 revêtant initialement toute la face supérieure de la couche 103 sous-jacente. Le guide d'onde 111 comprend par exemple, à l'une de ses extrémités (par exemple l'extrémité gauche, dans l'orientation de la figure 1A), une surface d'entrée destinée à recevoir un signal d'excitation, par exemple un rayonnement laser provenant d'une source laser, ou pompe. La surface d'entrée du guide d'ondes 111 est par exemple destinée à recevoir un faisceau laser sous une incidence inclinée par rapport à la face supérieure 101T du substrat semiconducteur 101, c'est-à-dire une incidence non parallèle à la face 101T. Le guide d'ondes 111 comprend par exemple en outre, à son autre extrémité (l'extrémité droite, dans l'orientation de la figure 1A), une surface de sortie destinée à transmettre un rayonnement vers l'extérieur du circuit intégré photonique 100. La surface de sortie du guide d'ondes 111 est par exemple destinée à émettre un rayonnement selon une direction inclinée par rapport à la face supérieure 101T du substrat 101. À titre d'exemple, les surfaces d'entrée et de sortie du guide d'ondes 111 permettant de réaliser un couplage dit « adiabatique ».

Les surfaces d'entrée et de sortie du guide d'ondes 111 présentent chacune, en vue de dessus, une forme générale sensiblement triangulaire. Dans l'exemple représenté en figure 1B, la surface d'entrée du guide d'ondes 111 comprend une structure périodique comportant une pluralité de tranchées de largeur sensiblement constante et régulièrement espacées, à pas constant. Dans cet exemple, les tranchées de la surface d'entrée du guide d'ondes 111 s'étendent dans la couche 105, depuis sa face supérieure, jusqu'à une profondeur inférieure à l'épaisseur de la couche 105. À titre d'exemple, la surface de sortie du guide d'ondes 111 présente une structure analogue ou identique à celle de la surface d'entrée.

Le guide d'ondes 111 comprend par exemple en outre une partie centrale non rectiligne interposée entre ses surfaces d'entrée et de sortie. Dans l'exemple représenté, la partie centrale du guide d'ondes 111 présente, en vue de dessus, une forme en S. Cet exemple n'est toutefois pas limitatif. À titre de variante, un ou plusieurs composants photoniques, par exemple formés dans l'empilement actif comprenant les couches 103, 105 et 107, peuvent être prévus entre les surfaces d'entrée et de sortie du guide d'ondes 111. À titre d'exemple, le ou les composants photoniques sont choisis parmi : un résonateur, un filtre, un démultiplexeur, un détecteur de photons, etc.

Selon un mode de réalisation, le circuit intégré photonique 100 comprend en outre au moins un mur d'isolation périphérique 113. Dans l'exemple illustré, le circuit intégré photonique 100 comprend deux murs d'isolation périphérique 113 entourant partiellement les surfaces d'entrée et de sortie, respectivement, du guide d'ondes 111. Toutefois, cet exemple n'est pas limitatif et le circuit intégré photonique 100 peut, à titre de variante, comprendre un nombre quelconque de murs d'isolation périphérique 113, chaque mur entourant au moins partiellement un composant photonique quelconque, par exemple différent d'une surface d'entrée ou de sortie d'un guide d'ondes.

Selon un mode de réalisation, chaque mur d'isolation périphérique 113 s'étend, depuis la face supérieure de la couche 107, jusque dans la couche 103. Dans l'exemple illustré en figure 1B, le mur d'isolation périphérique 113 entourant partiellement la surface d'entrée du guide d'ondes 111 traverse la couche 103 sur toute son épaisseur et s'étend verticalement dans l'épaisseur du substrat semiconducteur 101. Cet exemple n'est toutefois pas limitatif. À titre de variante, le mur d'isolation périphérique 113 peut traverser la couche 103 et s'interrompre sur et en contact avec la face supérieure 101T du substrat semiconducteur 101, ou pénétrer dans l'épaisseur de la couche 103 sans la traverser. Dans l'exemple représenté, chaque mur d'isolation périphérique 113 présente une hauteur d1 de l'ordre du micromètre, par exemple égale à environ 5 µm. Chaque mur d'isolation périphérique 113 présente en outre une largeur w1 de l'ordre de quelques dizaines de micromètres, par exemple égale à environ 20 µm.

Chaque mur d'isolation périphérique 113 peut, comme illustré en figure 1B, présenter une section de forme évasée, le mur 113 étant plus large en partie supérieure, c'est-à-dire au voisinage de la face supérieure de la couche 107, qu'en partie inférieure, c'est-à-dire au voisinage de la face supérieure 101T du substrat semiconducteur 101. Dans ce cas, la largeur w1 du mur d'isolation périphérique 113 correspond par exemple à la largeur maximale du mur 113.

Chaque mur d'isolation périphérique 113 présente par exemple, en vue de dessus, une forme de C entourant la surface d'entrée ou la surface de sortie du guide d'ondes 111. Toutefois, cet exemple n'est pas limitatif et chaque mur d'isolation périphérique 113 peut, à titre de variante, présenter, en vue de dessus, une forme quelconque permettant d'entourer au mieux un composant photonique du circuit intégré photonique 100.

Les murs d'isolation périphérique 113 sont optiquement absorbants. Les murs d'isolation périphérique 113 absorbent par exemple plus particulièrement des rayonnements présentant une longueur d'onde située dans une plage de longueurs d'onde d'émission d'une source laser irradiant le guide d'ondes 111.

À titre d'exemple, chaque mur d'isolation périphérique 113 est obtenu par formation d'une tranchée s'étendant, depuis la face supérieure de la couche 107, jusque dans la couche 103 puis dépôt, dans la tranchée, d'une couche en un matériau absorbant optiquement. Dans l'exemple illustré en figure 1B, le matériau absorbant comble la tranchée préalablement formée depuis la face supérieure de la structure.

Le matériau de chaque mur d'isolation périphérique 113 est par exemple choisi parmi :
- le carbone ;
- le germanium ;
- un polymère absorbant
- le silicium amorphe, par exemple dans un cas où la plage de longueurs d'onde à absorber est située aux alentours de 925 nm ;
- le silicium polycristallin dopé, par exemple dans un cas où la plage de longueurs d'onde à absorber est située aux alentours de 1 550 nm ;
- le silicium cristallin fortement dopé ;
- un matériau comprenant des nanoparticules absorbantes pouvant être entourées de ligands, par exemple obtenu par évaporation d'un solvant contenu dans une solution colloïdale de nanoparticules absorbantes ; et
- un métal ou un alliage métallique.

Un avantage du circuit intégré photonique 100 tient au fait que la présence des murs d'isolation périphérique 113 optiquement absorbants entourant les surfaces d'entrée et de sortie du guide d'ondes 111 permet d'isoler et de protéger d'autres composants photoniques du circuit 100 non détaillés en figures 1A et 1B. Cela limite ou évite la propagation de rayonnements parasites dans le circuit intégré photonique 100, notamment par rapport à un circuit analogue au circuit 100 mais dépourvu de murs d'isolation dans lequel des rayonnements parasites peuvent se propager dans la couche 103, dans la couche 107 et/ou dans le substrat semiconducteur 101 du fait de l'absence des murs d'isolation périphérique 113.

Le mur d'isolation périphérique 113 entourant la surface d'entrée du guide d'ondes 111 permet de réduire la quantité de rayonnements injectés directement dans les couches 103 et 107 et dans le substrat semiconducteur 101, et pouvant être guidés par ces éléments jusqu'à la surface de sortie du guide d'ondes 111. Le mur d'isolation périphérique 113 entourant la surface de sortie du guide d'ondes 111 permet de limiter la quantité de rayonnements parasites s'échappant par la sortie du guide d'ondes 111, les rayonnements parasites provenant de pertes dans le guide d'ondes 111 et/ou d'autres composants photoniques du circuit intégré photonique 100 non représentés en figures 1A et 1B.

La figure 1C est une vue de côté et en coupe selon le plan BB de la figure 1A d'une variante 100' du circuit intégré photonique 100 des figures 1A et 1B. Le circuit intégré photonique 100' de la figure 1C comprend des éléments communs avec le circuit intégré photonique 100 des figures 1A et 1B. Ces éléments communs ne seront pas détaillés à nouveau ci-après.

Le circuit intégré photonique 100' diffère du circuit intégré photonique 100 principalement en ce que, dans le cas du circuit intégré photonique 100', chaque mur d'isolation périphérique 113 comprend une tranchée 151 dont les flancs et le fond sont revêtus d'une couche 153 en matériau optiquement absorbant. Dans l'exemple représenté, la tranchée 151 s'étend, depuis la face supérieure de la couche 107, jusque dans la couche 103. Dans cet exemple, la couche 153 ne comble pas, c'est-à-dire ne remplit pas totalement, la tranchée 151.

La figure 2 est une vue de dessus, schématique et partielle, d'un circuit intégré photonique 200 selon un mode de réalisation. Le circuit intégré photonique 200 de la figure 2 comprend des éléments communs avec le circuit intégré photonique 100 des figures 1A et 1B. Ces éléments communs ne seront pas détaillés à nouveau ci-après.

Le circuit intégré photonique 200 diffère du circuit intégré photonique 100 principalement en ce qu'il comprend un guide d'ondes 211 comportant des surfaces d'entrée et de sortie présentant, en vue de dessus, une forme fuselée. De manière analogue au guide d'ondes 111 du circuit intégré photonique 100, le guide d'ondes 211 du circuit intégré photonique 200 comprend par exemple une âme formée dans la couche 105.

À la différence du guide d'ondes 111, dont les surfaces d'entrée et de sortie sont par exemple respectivement destinées à recevoir et à émettre un rayonnement selon des directions inclinées par rapport à la face supérieure 101T du substrat semiconducteur 101, les surfaces d'entrée et de sortie du guide d'ondes 211 sont par exemple respectivement destinées à recevoir et à émettre un rayonnement selon des directions sensiblement parallèles à la face supérieure 101T du substrat semiconducteur 101. À titre d'exemple, les surfaces d'entrée et de sortie du guide d'ondes 211 permettant de réaliser un couplage dit « bout à bout » (« butt coupling », en anglais).

De manière analogue au guide d'ondes 111 du circuit intégré photonique 100, les surfaces d'entrée et de sortie du guide d'ondes 211 du circuit intégré photonique 200 sont entourées chacune d'un mur d'isolation périphérique 213 optiquement absorbant. Dans l'exemple illustré en figure 2, chaque mur d'isolation périphérique 213 comprend deux parties présentant chacune, en vue de dessus, une forme en L. Les deux parties de chaque mur d'isolation périphérique 213 sont situées de part et d'autre d'une direction de propagation du rayonnement à l'intérieur du guide d'ondes 211.

De manière analogue ou identique aux murs d'isolation périphérique 113, chacun des murs d'isolation périphérique 213 s'étend, depuis la face supérieure de la couche 107, jusqu'à la couche 103. Par ailleurs, chaque mur d'isolation périphérique 213 peut présenter une structure pleine, par exemple comme exposé précédemment en relation avec la figure 1B, ou une structure creuse comprenant une couche optiquement absorbante revêtant les flancs et le fond d'une tranchée, par exemple comme exposé précédemment en relation avec la figure 1C.

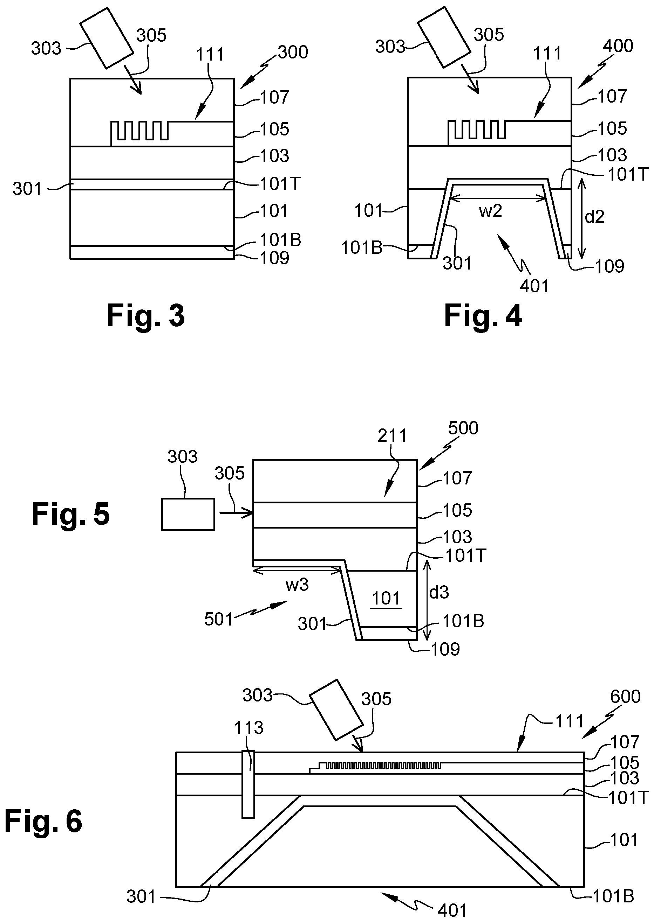

La figure 3 est une vue de côté et en coupe, schématique et partielle, d'un circuit intégré photonique 300 selon un mode de réalisation. Le circuit intégré photonique 300 de la figure 3 comprend des éléments communs avec le circuit intégré photonique 100 des figures 1A et 1B. Ces éléments communs ne seront pas détaillés à nouveau ci-après.

Selon un mode de réalisation, le circuit intégré photonique 300 comprend une couche optiquement absorbante 301 située à l'aplomb de la surface d'entrée du guide d'ondes 111. La couche optiquement absorbante 301 est interposée entre le substrat semiconducteur 101 et la couche 103. Plus précisément, dans l'exemple représenté, la couche optiquement absorbante 301 est en contact, par sa face inférieure, avec la face supérieure 101T du substrat semiconducteur 101. Par ailleurs, dans cet exemple, la couche optiquement absorbante 301 est en contact par sa face supérieure, avec la face inférieure de la couche 103.

À titre d'exemple, la couche optiquement absorbante 301 est en un matériau choisi parmi :
- le carbone ;
- le germanium ;
- un polymère absorbant
- le silicium amorphe, par exemple dans un cas où la plage de longueurs d'onde à absorber est située aux alentours de 925 nm ;
- le silicium polycristallin dopé, par exemple dans un cas où la plage de longueurs d'onde à absorber est située aux alentours de 1 550 nm ;
- le silicium cristallin fortement dopé ;
- un matériau comprenant des nanoparticules absorbantes pouvant être entourées de ligands, par exemple obtenu par évaporation d'un solvant contenu dans une solution colloïdale de nanoparticules absorbantes ; et
- un métal ou un alliage métallique.

La couche optiquement absorbante 301 revêt par exemple toute la face supérieure 101T du substrat semiconducteur 101. À titre d'exemple, la couche optiquement absorbante 301 est déposée sur toute la face 101T du substrat 101 préalablement au dépôt des couches 103, 105 et 107.

Dans l'exemple représenté, une source de rayonnement laser 303, symbolisée par un rectangle en figure 3, émet un rayonnement laser 305 vers la surface d'entrée du guide d'ondes 111. Dans l'exemple illustré, le rayonnement laser 305 est émis par la source 303 selon une direction inclinée par rapport à la face supérieure 101T du substrat semiconducteur 101.

Dans l'exemple illustré, le circuit intégré photonique 300 est, par rapport au circuit intégré photonique 100 des figures 1A et 1B, dépourvu des murs d'isolation périphérique 113. Cet exemple n'est toutefois pas limitatif, le circuit intégré photonique 300 pouvant, à titre de variante, comporter des murs d'isolation périphérique analogues ou identiques aux murs d'isolation périphérique 113.

Un avantage du circuit intégré photonique 300 tient au fait que la présence de la couche optiquement absorbante 301 à l'aplomb de la surface d'entrée du guide d'ondes 111 limite ou évite la propagation de rayonnements parasites dans la structure du circuit intégré photonique 300, en particulier dans le substrat semiconducteur 101 et dans la couche 103.

La figure 4 est une vue de côté et en coupe, schématique et partielle, d'un circuit intégré photonique 400 selon un mode de réalisation. Le circuit intégré photonique 400 de la figure 4 comprend des éléments communs avec le circuit intégré photonique 300 de la figure 3. Ces éléments communs ne seront pas détaillés à nouveau ci-après.

Le circuit intégré photonique 400 diffère du circuit intégré photonique 300 en ce que, dans le cas du circuit 400, la couche optiquement absorbante 301 située sous et en contact avec la couche 103 revêt des flancs et un fond d'une cavité 401, ou tranchée, s'étendant depuis la face inférieure de la couche 109 jusqu'à la couche 103. Dans l'exemple représenté, la cavité 401 traverse le substrat semiconducteur 101 et s'interrompt dans l'épaisseur de la couche 103. Cet exemple n'est toutefois pas limitatif, la cavité 401 pouvant, à titre de variante, ne pas pénétrer dans la couche 103.

La cavité 401 présente par exemple, en vue de dessus, une forme sensiblement rectangulaire. Cet exemple n'est toutefois pas limitatif, la cavité 401 pouvant plus généralement présenter, en vue de dessus, une forme quelconque, par exemple une forme polygonale autre que rectangulaire - par exemple carrée, triangulaire, hexagonale, etc. - ou une forme arrondie - par exemple ovale, circulaire, etc.

La cavité 401 présente par exemple une profondeur d2. À titre d'exemple, la profondeur d2 de la cavité 401 est de l'ordre de plusieurs centaines de micromètres, par exemple égale à environ 700 µm.

Par ailleurs, la cavité 401 présente une dimension latérale minimale w2. La cavité 401 peut, comme illustré en figure 4, présenter une section de forme évasée, la cavité 401 étant plus large en partie inférieure, c'est-à-dire au voisinage de la face inférieure 101B du substrat semiconducteur 101, qu'en partie supérieure, c'est-à-dire au voisinage de la face supérieure 101T du substrat semiconducteur 101. Dans ce cas, la dimension w2 de la cavité 401 correspond par exemple à la largeur du fond de la cavité 401. À titre d'exemple, la dimension w2 de la cavité 401 est de l'ordre de plusieurs dizaines ou d'une centaine de micromètres, par exemple égale à environ 100 µm.

La figure 5 est une vue de côté et en coupe, schématique et partielle, d'un circuit intégré photonique 500 selon un mode de réalisation. Le circuit intégré photonique 500 de la figure 5 comprend des éléments communs avec le circuit intégré photonique 300 de la figure 3. Ces éléments communs ne seront pas détaillés à nouveau ci-après.

Le circuit intégré photonique 400 diffère du circuit intégré photonique 300 en ce qu'il comprend, à la place du guide d'ondes 111, le guide d'ondes 211.

Dans l'exemple représenté, la source de rayonnement laser 303 émet le rayonnement laser 305 vers la surface d'entrée du guide d'ondes 211. Dans l'exemple illustré, le rayonnement laser 305 est émis par la source 303 selon une direction sensiblement parallèle à la face supérieure 101T du substrat semiconducteur 101.

Le circuit intégré photonique 500 comprend, sous la surface d'entrée du guide d'ondes 211, une cavité 501 dont les parois sont revêtues de la couche optiquement absorbante 301. La cavité 501 est par exemple analogue à la cavité 401. À la différence de la cavité 401, bordée latéralement sur toutes ses faces par le substrat semiconducteur 101, la cavité 501 comprend au moins un côté débouchant sur une face latérale de la structure du circuit intégré photonique 500.

Dans l'exemple représenté, la cavité 501 présente par une profondeur d3 et une dimension latérale minimale w3. La profondeur d3 et la dimension w3 de la cavité 501 présentent par exemple respectivement des valeurs identiques à celles indiquées ci-dessus pour la profondeur d2 et à la dimension latérale minimale w2 de la cavité 401.

La figure 6 est une vue de côté et en coupe, schématique et partielle, d'un circuit intégré photonique 600 selon un mode de réalisation. Le circuit intégré photonique 600 de la figure 6 comprend des éléments communs avec le circuit intégré photonique 400 de la figure 4. Ces éléments communs ne seront pas détaillés à nouveau ci-après.

Le circuit intégré photonique 600 diffère du circuit intégré photonique 400 en ce qu'il comprend en outre le mur d'isolation périphérique 113 optiquement absorbant entourant la surface d'entrée du guide d'ondes 111.

Un avantage du circuit intégré photonique 600 tient au fait qu'il permet, par rapport aux circuits intégrés photoniques 100 et 300, de limiter davantage la propagation de rayonnements parasites dans la structure.

Bien que la couche 109 n'ait pas été représentée en figure 6, le circuit intégré photonique 600 peut bien entendu comporter la couche 109 du côté de la face inférieure 101B du substrat semiconducteur 101.

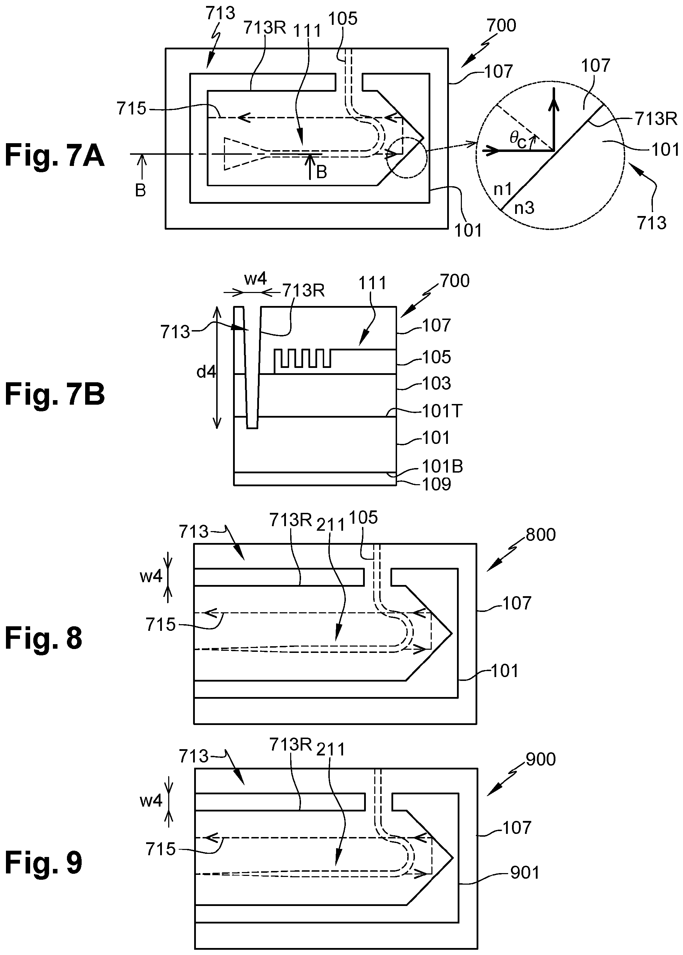

La figure 7A est une vue de dessus, schématique et partielle, d'un circuit intégré photonique 700 selon un mode de réalisation. La figure 7B est une vue de côté et en coupe selon le plan BB de la figure 7A du circuit intégré photonique 700 de la figure 7A. Le circuit intégré photonique 700 des figures 7A et 7B comprend des éléments communs avec le circuit intégré photonique 100 des figures 1A et 1B. Ces éléments communs ne seront pas détaillés à nouveau ci-après.

Le circuit intégré photonique 700 diffère du circuit intégré photonique 100 principalement en ce qu'il est dépourvu des murs d'isolation périphérique 113 et en ce qu'il comprend une structure d'isolation périphérique 713 comportant une surface optiquement réfléchissante 713R entourant la surface d'entrée du guide d'ondes 111.

Dans l'exemple représenté, la structure d'isolation périphérique 713 tire profit du phénomène de réflexion totale (« Total Internal Reflection » - TIR, en anglais).

Selon un mode de réalisation, la structure d'isolation périphérique 713 entoure au moins partiellement un composant photonique et s'étend, depuis la face supérieure de la couche 107, dans l'empilement actif comprenant les couches 103, 105 et 107. Dans l'exemple illustré, la structure d'isolation périphérique 713 entoure partiellement la surface d'entrée du guide d'ondes 111. Par ailleurs, dans cet exemple, la structure d'isolation périphérique 713 s'étend, depuis la face supérieure de la couche 107, à travers les couches 107, 105 et 103 et s'interrompt dans l'épaisseur du substrat semiconducteur 101. Cet exemple n'est toutefois pas limitatif. À titre de variante, la structure d'isolation périphérique 713 peut traverser la couche 103 et s'interrompre sur et en contact avec la face supérieure 101T du substrat semiconducteur 101, ou pénétrer dans l'épaisseur de la couche 103 sans la traverser.

Dans l'exemple représenté, la structure d'isolation périphérique 713 présente une hauteur d4 de l'ordre de plusieurs centaines de micromètres, par exemple égale à environ 100 µm. La structure d'isolation périphérique 713 présente en outre une largeur w4 de l'ordre de quelques dizaines de micromètres, par exemple égale à environ 20 µm.

La structure d'isolation périphérique 713 peut, comme illustré en figure 7B, présenter une section de forme évasée, la structure 713 étant plus large en partie supérieure, c'est-à-dire au voisinage de la face supérieure de la couche 107, qu'en partie inférieure, c'est-à-dire au voisinage de la face supérieure 101T du substrat semiconducteur 101. Dans ce cas, la largeur w4 de la structure d'isolation périphérique 713 correspond par exemple à la largeur maximale de la structure d'isolation périphérique 713.

Dans l'exemple illustré, la structure d'isolation périphérique 713 présente la forme d'une tranchée remplie d'air. Dans cet exemple, la surface optiquement réfléchissante 713R comprend une face dont la normale est inclinée d'un angle θc, appelé angle critique, par rapport à la direction de propagation du rayonnement à l'intérieur du guide d'ondes 111 depuis la surface d'entrée du guide d'ondes 111. Cela permet de faire en sorte qu'un rayonnement parasite s'échappant du guide d'ondes 111 et parvenant jusqu'à la surface optiquement réfléchissante 713R soit totalement réfléchi dans la partie de la structure active bordée par la structure d'isolation périphérique 713 et ne se propage pas en dehors de la structure d'isolation périphérique 713. En figure 7A, des lignes en pointillé symbolisent un chemin de propagation 715 des rayonnements parasites à l'intérieur d'une zone délimitée latéralement par la surface optiquement réfléchissante 713R de la structure d'isolation périphérique 713.

Dans l'exemple représenté, le rayonnement parasite réfléchi atteint une autre face de la surface optiquement réfléchissante 713R. De façon analogue à ce qui a été décrit précédemment, ladite face est inclinée de sorte que le rayonnement parasite subisse une réflexion totale et soit par conséquent confiné à l'intérieur de la structure d'isolation périphérique 713.

L'angle critique θc permettant d'obtenir une réflexion totale du rayonnement parasite est fonction de l'indice de réfraction n1 du matériau de la couche 107 et d'un indice de réfraction n3 du matériau situé à l'intérieur de la structure d'isolation périphérique 713 - en l'espèce, de l'air. L'angle critique θc est plus précisément égal à arcsin(n3/n1). Dans le cas où la couche 107 est en oxyde de silicium et où la structure d'isolation périphérique 713 est remplie d'air, l'angle critique θc est égal à environ 43,6°.

Un avantage du circuit intégré photonique 700 réside dans le fait qu'il permet de confiner, à l'intérieur de la structure d'isolation périphérique 713, les rayonnements parasites produits par le guide d'ondes 111. Cela permet d'isoler le guide d'ondes 111 et de protéger, contre les rayonnements parasites, d'autres composants photoniques du circuit 700 non détaillés en figures 7A et 7B. Cela limite ou évite la propagation de rayonnements parasites dans le circuit intégré photonique 700, notamment par rapport à un circuit analogue au circuit 700 mais dépourvu de la structure d'isolation périphérique 713 dans lequel des rayonnements parasites peuvent se propager dans la couche 103, dans la couche 107 et/ou dans le substrat semiconducteur 101 du fait de l'absence de la structure d'isolation périphérique 713.

La figure 8 est une vue de dessus, schématique et partielle, d'un circuit intégré photonique 800 selon un mode de réalisation. Le circuit intégré photonique 800 de la figure 8 comprend des éléments communs avec le circuit intégré photonique 700 des figures 7A et 7B. Ces éléments communs ne seront pas détaillés à nouveau ci-après.

Le circuit intégré photonique 800 diffère du circuit intégré photonique 700 principalement en ce qu'il comprend, à la place du guide d'ondes 111, le guide d'ondes 211. Dans l'exemple représenté, la structure d'isolation périphérique 713 débouche du côté d'une face latérale du circuit intégré photonique 800 sur laquelle affleure la surface d'entrée du guide d'ondes 211.

Le circuit intégré photonique 800 présente des avantages analogues ou identiques à ceux du circuit intégré photonique 700.

La figure 9 est une vue de dessus, schématique et partielle, d'un circuit intégré photonique 900 selon un mode de réalisation. Le circuit intégré photonique 900 de la figure 9 comprend des éléments communs avec le circuit intégré photonique 800 de la figure 8. Ces éléments communs ne seront pas détaillés à nouveau ci-après.

Le circuit intégré photonique 900 diffère du circuit intégré photonique 800 principalement en ce que sa structure d'isolation périphérique 713 est au moins partiellement remplie d'un matériau réfléchissant 901, causant une réflexion de rayonnements parasites produits par le guide d'ondes 211 permettant de confiner ces rayonnements à l'intérieur de la structure d'isolation périphérique 713.

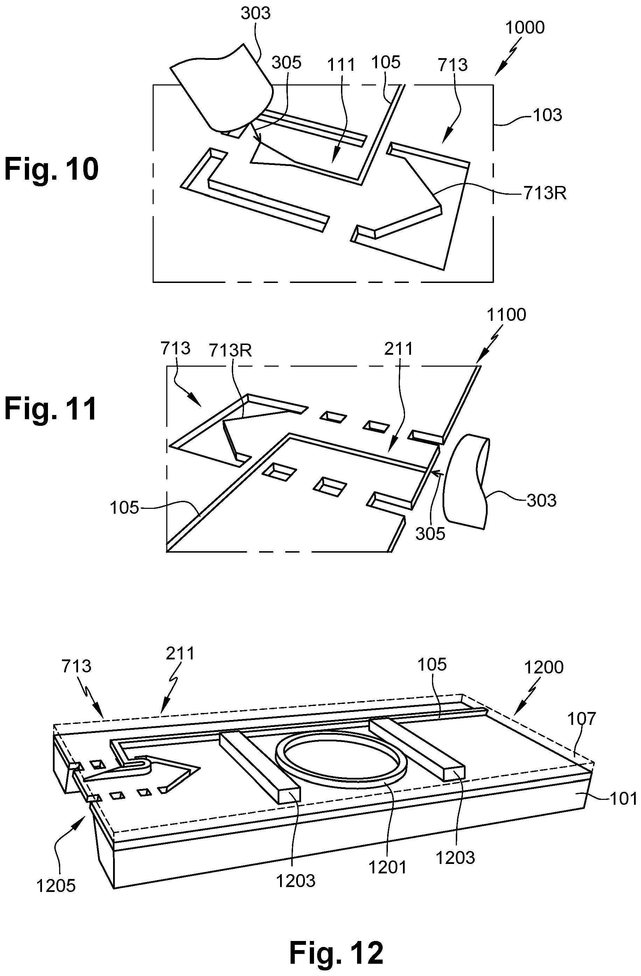

La figure 10 est une vue en perspective, schématique et partielle, d'un circuit intégré photonique 1000 selon un mode de réalisation. Le circuit intégré photonique 1000 de la figure 10 comprend des éléments communs avec le circuit intégré photonique 700 des figures 7A et 7B. Ces éléments communs ne seront pas détaillés à nouveau ci-après. Dans un souci de lisibilité du dessin, la couche 107 n'a pas été représentée en figure 10.

Le circuit intégré photonique 1000 diffère du circuit intégré photonique 700 principalement en ce que le circuit intégré 1000 est dépourvu du substrat semiconducteur 101 sous la structure d'isolation périphérique 713 et sous la surface d'entrée du guide d'ondes 111.

Cela permet, par rapport au circuit intégré photonique 700, de limiter ou d'éviter encore davantage la propagation de rayonnements parasites. Cela permet en particulier de limiter ou d'éviter la propagation, à l'intérieur du substrat semiconducteur 101, de rayonnements parasites produits au voisinage de la surface d'entrée du guide d'ondes 111.

La figure 11 est une vue en perspective, schématique et partielle, d'un circuit intégré photonique 1100 selon un mode de réalisation. Le circuit intégré photonique 1100 de la figure 11 comprend des éléments communs avec le circuit intégré photonique 800 de la figure 8. Ces éléments communs ne seront pas détaillés à nouveau ci-après. Dans un souci de lisibilité du dessin, la couche 107 n'a pas été représentée en figure 11.

Le circuit intégré photonique 1100 diffère du circuit intégré photonique 800 principalement en ce que le circuit intégré 1100 est dépourvu du substrat semiconducteur 101 sous la structure d'isolation périphérique 713 et sous la surface d'entrée du guide d'ondes 211.

Cela permet, par rapport au circuit intégré photonique 800, de limiter ou d'éviter encore davantage la propagation de rayonnements parasites. Cela permet en particulier de limiter ou d'éviter la propagation, à l'intérieur du substrat semiconducteur 101, de rayonnements parasites produits au voisinage de la surface d'entrée du guide d'ondes 211.

La figure 12 est une vue en perspective, schématique et partielle, d'un circuit intégré photonique 1200 selon un mode de réalisation.

Dans l'exemple illustré, le circuit intégré photonique 1200 comprend le guide d'ondes 211, la structure d'isolation périphérique 713 entourant la surface d'entrée du guide d'ondes 211, et un résonateur 1201. Le résonateur 1201 est situé à proximité d'une partie rectiligne du guide d'ondes 211 et présente, en vue de dessus, une forme annulaire. Le résonateur 1201 comprend par exemple une région en forme d'anneau formée dans la couche 105.

Dans l'exemple représenté, des murs d'isolation périphérique 1203 sont disposés de part et d'autre du résonateur 1201. Dans cet exemple, les murs d'isolation périphérique 1203 présentent chacun une forme rectiligne s'étendant latéralement le long d'une direction principale sensiblement orthogonale à la direction de propagation du rayonnement à l'intérieur de la partie rectiligne du guide d'ondes 211. Les murs d'isolation périphérique 1203 présentent par exemple chacun une structure analogue à celle des murs d'isolation périphérique 113 du circuit intégré photonique 100 des figures 1A et 1B.

Dans l'exemple illustré, le circuit intégré photonique 1200 comprend une cavité 1205 située dans le substrat semiconducteur 101, à l'aplomb de la surface d'entrée du guide d'ondes 211 et de la structure d'isolation périphérique 713. Dans cet exemple, la cavité 1205 s'étend verticalement sur toute l'épaisseur du substrat semiconducteur 101, de sorte que le substrat semiconducteur 101 est absent sous la surface d'entrée du guide d'ondes 211 et sous la structure d'isolation périphérique 713.

Un avantage du circuit intégré photonique 1200 tient au fait que l'absence du substrat semiconducteur 101 sous la surface d'entrée du guide d'ondes 211 et sous la structure d'isolation périphérique 713 permet de limiter ou d'éviter la propagation, notamment dans le substrat semiconducteur 101, de rayonnements parasites produits au voisinage de la surface d'entrée du guide d'ondes 211. Par ailleurs, la présence des murs d'isolation périphérique 1203 autour du résonateur 1201 permet de limiter ou d'éviter la propagation, notamment dans les couches 103 et 107, de rayonnements parasites produits par le résonateur 1201.

Divers modes de réalisation et variantes ont été décrits. La personne du métier comprendra que certaines caractéristiques de ces divers modes de réalisation et variantes pourraient être combinées, et **d'autres** variantes apparaîtront à la personne du métier. En particulier, la personne du métier est capable, à partir des indications de la présente description, de prévoir un circuit intégré photonique comprenant la couche optiquement absorbante 301, située à l'aplomb d'au moins un composant photonique et en contact avec une face de la couche 103 opposée à la couche 105, et au moins un mur d'isolation périphérique 113 ou une structure d'isolation périphérique 713 entourant le composant.

Par ailleurs, ce qui est exposé plus particulièrement en relation avec un exemple d'application à des circuits intégrés photoniques quantiques s'applique plus généralement à tout type de circuit intégré photonique.

Enfin, la mise en œuvre pratique des modes de réalisation et variantes décrits est à la portée de la personne du métier à partir des indications fonctionnelles données ci-dessus. En particulier, les modes de réalisation décrits ne se limitent pas aux exemples particuliers de matériaux et de dimensions mentionnés dans la présente description.

## Revendications

1. Circuit intégré photonique (300 ; 400 ; 500 ; 600 ; 1200) comprenant :
- un substrat semiconducteur (101) ;
- un empilement actif situé du côté d'une première face (101T) du substrat semiconducteur (101) et comportant :
une première couche (103) en un premier matériau présentant un premier indice de réfraction revêtant la première face (101T) du substrat semiconducteur (101) ;
une deuxième couche (105) en un deuxième matériau présentant un deuxième indice de réfraction revêtant la première couche (103) ; et
une troisième couche (107) en le premier matériau revêtant la deuxième couche (105) ;
- au moins un composant photonique (111 ; 211 ; 1201) formé dans l'empilement actif ; et
- une couche optiquement absorbante (301) située à l'aplomb dudit au moins un composant photonique (111 ; 211 ; 1201) et en contact avec une face de la première couche (103) opposée à la deuxième couche (105),
le circuit comprenant en outre une cavité (401 ; 501) s'étendant, depuis une deuxième face (101B) du substrat semiconducteur (101) opposée à la première face (101T), jusqu'à la première face du substrat semiconducteur et située à l'aplomb dudit au moins un composant photonique (111 ; 211 ; 1201), la couche optiquement absorbante (301) revêtant un fond de la cavité.

2. Circuit (300 ; 400 ; 500 ; 600 ; 1200) selon la revendication 1, dans lequel la couche optiquement absorbante (301) est située sur et en contact avec la première face (101T) du substrat semiconducteur (101).

3. Circuit (300 ; 400 ; 500 ; 600 ; 1200) selon la revendication 1 ou 2, dans lequel la couche optiquement absorbante (301) est en un troisième matériau choisi parmi :
- le carbone ;
- le germanium ;
- un polymère absorbant
- le silicium amorphe ;
- le silicium polycristallin dopé ;
- le silicium cristallin fortement dopé ;
- un matériau comprenant des nanoparticules absorbantes ; et
- un métal ou un alliage métallique.

4. Circuit (300 ; 400 ; 500 ; 600 ; 1200) selon l'une quelconque des revendications 1 à 3, dans lequel le deuxième indice de réfraction est strictement supérieur au premier indice de réfraction.

5. Circuit (300 ; 400 ; 500 ; 600 ; 1200) selon la revendication 4, dans lequel le premier matériau est l'oxyde de silicium et le deuxième matériau est le silicium.

6. Circuit (300 ; 400 ; 500 ; 600 ; 1200) selon l'une quelconque des revendications 1 à 5, dans lequel ledit au moins un composant photonique (111 ; 211 ; 1201) est choisi parmi :
- une surface d'entrée ou une surface de sortie d'un guide d'ondes (111 ; 211) ;
- un filtre ;
- un résonateur (1201) ;
- un démultiplexeur ; et
- un détecteur de photons.

7. Circuit (600 ; 1200) selon l'une quelconque des revendications 1 à 6, comprenant en outre au moins un mur d'isolation périphérique (113 ; 1203) optiquement absorbant entourant au moins partiellement ledit au moins un composant photonique (111 ; 211 ; 1201) et s'étendant, depuis une face de la troisième couche (107) opposée au substrat semiconducteur (101), jusque dans la première couche (103).

8. Circuit (600 ; 1200) selon la revendication 7, dans lequel ledit au moins un mur d'isolation périphérique (113 ; 1203) traverse la première couche (103).

9. Circuit (600 ; 1200) selon la revendication 8, dans lequel ledit au moins un mur d'isolation périphérique (113 ; 1203) pénètre dans le substrat semiconducteur (101).
